# EUROPEAN PATENT SPECIFICATION

(11) **EP 3 086 635 B1**
(45) Date of publication and mention of the grant of the patent: **07.04.2021**
(21) Application number: 14874543.3
(22) Date of filing: 17.12.2014
(51) Int. Cl.: A01K 61/00

(54) **A SEMISUBMERSIBLE, CYLINDRICAL NET CAGE, CLOSABLE BULKHEADS FOR A NET CAGE AND A BOTTOM FOR THE NET CAGE THAT CAN BE ELEVATED**
HALBSINKBARER ZYLINDRISCHER NETZKÄFIG, VERSCHLIESSBARE SCHOTTEN FÜR EINEN NETZKÄFIG UND HEBBARER BODEN FÜR DEN NETZKÄFIG
CAGE EN FILET CYLINDRIQUE SEMISUBMERSIBLE, CLOISONS REFERMABLES POUR CAGE EN FILET ET FOND POUVANT ÊTRE REMONTÉ POUR CAGE EN FILET

(30) Priority: 23.12.2013 NO 20131733
(43) Date of publication of application: 02.11.2016
(73) Proprietor: Ocean Farming AS, 7263 Hamarvik (NO)
(72) Inventor: HAMMERNES, Torbjørn Kjønnøy, N-7029 Trondheim (NO); HAMMERNES, Arvid Kjønnøy, N-7263 Hamarvik (NO)
(74) Representative: Heggstad, Jon Dagson
(86) International application number: PCT/NO2014/050239
(87) International publication number: WO 2015/099540

(56) References cited:
- WO-A1-87/04319
- WO-A1-99/40780
- WO-A2-2013/108251
- DD-A1- 227 033
- DE-A1- 3 828 017
- NO-B1- 310 131
- US-A1- 2012 167 829

## Description

The present invention relates to a generally cylindrical semisubmersible net cage.

A number of different marine installations are known and used for breeding fish and shellfish. The most commonly known installations are fish farming net cages including a floating member such as a float collar at the top, flexible sidewalls mounted to the float collar, and a bottom mounted to the sidewalls. In many cases, the bottom is also made of a flexible material. Various methods are known for keeping the net cage outstretched. The most common is to use a bottom ring that keeps the lower ends of the sidewalls spaced apart. The bottom ring is connected to the float collar by a chain or the like.

When a breeding net cage is to be emptied, because the fish or shellfish are to be slaughtered, for example, this may be accomplished in different manners known in the art. It is common to lift the bottom gradually so that the density of fish increases in the net cage, the emptying is accelerated, while at the same time it is easier to verify that the net cage has been emptied. In conventional net cages, as described above, the volume is reduced by lifting the bottom ring to which the lower parts of the sidewalls are connected, while at the same time the net lines of the sidewalls are pulled up. The net line is pulled up manually and suspended in folds on the float collar. The pulling must be performed as evenly as possible both in the bottom ring and in the sidewalls in order to avoid creating tension in the net line, which may in turn result in a hole in the net. In the case of non-uniform loading, tension may arise in the net line and/or the net line may hit tethering chains for the bottom ring and the like. Contact between the net line and chain could result in wear and holes in the net line.

Thus, lifting the bottom ring is resource-demanding and requires a lot of crew and equipment. The biggest problem with known net cages is that non-uniform wear, tear, and/or holes in the wall and/or bottom net line result when the bottom ring is lifted. Also, the operation of lifting the bottom ring is hazardous for the crew, which is either located on the float collar or in nearby boats.

In heavy sea, it is also a problem that the net cage bags / nets are moving and hit by the fish. This may put the fish under stress, reduce the well-being of the fish, and cause injury to the fish.

US 2012/167829 discloses a centre spar fish pen with an elongate spar buoy and a reserve buoyancy buoy disposed over a top end of the spar buoy. Lower and upper rim assemblies are attached to the spar buoy and each other with tension members

DD 227 033 discloses a confinement device for treating fish in a circular container.

WO87/04319 discloses an enclosure for breeding fish. The enclosure at its upper side wall portion is secured to an upper buoyancy or floating frame. The lower side wall portion of enclosure is secured to a liftable and lowerable frame for lifting the bottom of said enclosure from its immersed position in the water to an upper position in the water, to facilitate catching operations of bred fish, and maintenance of the sheet/net material of said enclosure.

WO99/40780 discloses an aquaculture pen with a frame suspending a net. The frame is sufficiently buoyant to suspend the net without sinking below the level of the water in which it floats. The net is formed with a cylindrical sidewall and a bottom submerged wall that closes the sidewall at an end opposite the frame.

GB 2361400 discloses a fish storage unit completely or partially filled with water. The fish storage unit is equipped with a first horizontally movable water penetrable displacement means and a second water penetrable displacement means. The displacement means may comprise a frame supporting a mesh grid.

The objective of the present invention is to provide a marine arrangement for use in the breeding of fish and/or shellfish, having a bottom that can be elevated / lowered when necessary and that will not cause stress or injury to the fish/shellfish. It is a further object that the bottom shall be capable of being elevated to and possibly above the sea surface for cleaning. Another object is that the arrangement shall be more escape-resistant, increase the lifetime, and reduce fouling as compared with the corresponding known arrangements. Still another object is to provide an arrangement that is weather-resistant and that is stable in the sea even in heavy sea, that resists conditions with strong currents, and that may be sized for extremely large amounts of fish. A further object of the present invention is to provide a net cage that is fully machine-operable, and that is able to sort fish of different sizes. Finally, it is an object to provide a net cage having a shape ensuring a good well-being for the fish and being adapted for the movement pattern of the fish.

Hence, the present invention relates to a generally cylindrical semisubmersible net cage including a generally circular upper support structure, a generally circular lower support structure, at least three peripheral columns having a central longitudinal axis extending between the upper support structure and the lower support structure, upper radial support arms extending from the generally circular upper support structure to an upper centre thereof, lower radial support arms extending from the generally circular lower support structure to a lower centre thereof, a central column attached to the upper radial support arms and the lower radial support arms, extending between the centre of the upper support structure and the centre of the lower support structure. The net cage further comprises a water-permeable generally cylindrical lateral barrier extended between the upper support structure and the generally circular lower support structure, and a water-permeable generally circular bottom barrier is extended internally along a circumference of the generally circular lower support structure. A first fixed bulkhead with a first removable barrier extends radially between the central column, the generally circular upper support structure, and the generally circular lower support structure. A second fixed bulkhead having a second removable barrier extends radially between the central column, the generally circular upper support structure, and the generally circular lower support structure. A sliding bulkhead having a removable barrier is pivotally supported at the central column and extends in a radial direction between the central column, the generally circular upper support structure, and the generally circular lower support structure, the sliding bulkhead being rotatable about the central column. A bottom that can be elevated is provided between the first fixed bulkhead and the second fixed bulkhead. Ballast tanks are provided for lifting, lowering, and balancing the generally cylindrical semisubmersible net cage. Of course, the ballast tanks are connected to common systems for emptying, filling, monitoring the amount of ballast, etc. for elevating, lowering, and adjusting the inclination of the net cage.

At least three ballast tanks may be provided, which may have a central vertical axis, located along the generally circular lower support structure.

The at least three ballast tanks located along the generally circular lower support structure may protrude below the generally circular lower support structure in a direction away from the generally circular upper support structure.

Each of the at least three ballast tanks has a vertical axis, and the at least three ballast tanks include a section having an external portion with a substantially uniform cross-sectional area along the vertical axis, and a tapering section having a decreasing cross-sectional area along the vertical axis.

The section having an outer portion with a substantially uniform cross-sectional area along the vertical axis may be a cylindrical section, and the tapering section having a decreasing cross-sectional area along the vertical axis may be a generally conical section.

The at least three ballast tanks may be mounted to the at least three peripheral columns, and the longitudinal axes of the ballast tanks may be coincident with the longitudinal axes of the peripheral columns.

A bulkhead having a removable water-permeable barrier or net for a net cage is also disclosed. The bulkhead comprises an enclosing frame including an upper frame section, a lower frame section, a first lateral frame section, and a second lateral frame section, extending between the upper frame section and the lower frame section. The frame sections enclose an open bulkhead area, and the first and second lateral frame sections comprise an upper part proximate to the upper frame section and a lower part proximate to the lower frame section. At least one guide wire extends between the upper frame section and the lower frame section. The at least one guide wire may assume a first position across the open bulkhead area. The bulkhead comprises at least one tensioning mechanism for the at least one guide wire. The water-permeable removable barrier is treaded onto the at least one guide wire, and at least one mechanism is provided for moving the at least one guide wire away from the open bulkhead area, and at least one lifting mechanism is provided to allow the water-permeable barrier to be lifted.

The at least one tensioning mechanism and the at least one lifting mechanism for the water-permeable barrier may include at least one winch.

The mechanism for moving the at least one guide wire away from the open bulkhead area may comprise at least one lateral pull wire connected to a winch, looped around the at least one guide wire, the at least one lateral pull wire extending from the first or second lateral frame section.

The moving mechanism may comprise first and second lateral pull wires, the first lateral pull wire extending from the upper part of the first or second lateral frame section, and the second lateral pull wire extending from the lower part of the first or second lateral frame section. The first and second lateral pull wires both extend from the same lateral frame section.

In an alternative embodiment, a travelling block may be mounted at a lower end of each guide wire. At least one sliding track or rail may run along the upper frame section of the bulkhead, the first lateral frame section, the lower frame section, and the second lateral frame section so that the sliding track forms a continuous loop along the enclosing frame of the bulkhead. Traction means extends in the sliding track along the path in the enclosing frame of the bulkhead. Each travelling block is slidably mounted to the sliding track and each travelling block is mounted to the traction means. A drive unit is provided for operating the traction means along the loop on the enclosing frame of the bulkhead. Operation of the drive unit will move the guide wire(s) / support wire(s) between a first position across the open bulkhead area and a second position at least substantially outside of the open bulkhead area. In other words, moving the guide wire(s) away from the open bulkhead area is accomplished in that the travelling block(s) is/are pulled along the sliding track or rail. Typically, the sliding track has a C-shaped cross-section and the travelling block is then positioned inside the C-shaped cross-section.

The bulkhead may further comprise at least a central column bearing for being supported by and pivotally mounted to a central column of a cylindrical net cage, the at least one central column bearing being connected to the first lateral frame section. In this manner, the bulkhead may be rotatable about a central column of a net cage as described above.

The bulkhead may further comprise a curved, relative to the at least upper frame section, guide section, with the upper frame section protruding radially from the curved guide section (26), the curved guide section comprising running pulleys allowing movement relative to a peripheral path on a cylindrical net cage having a centre coinciding with a central column of the cylindrical net cage.

A segmented net cage bottom that can be elevated, the bottom comprising a bottom frame having two radial lateral frame sections and an end section extending between the two radial lateral frame sections, a bottom net between the frame sections, the bottom frame further being attached to a lateral net on each side of the bottom frame so that elevating the lateral nets also elevates the bottom, is also disclosed.

Brief description of the attached drawings:
Fig. 1 is a perspective view of a semisubmersible net cage according to the invention;
Fig. 2-6 are perspective views of parts of the net cage shown in Fig. 1, showing different steps in the crowding of fish using a fixed bulkhead and a sliding bulkhead according to the invention;

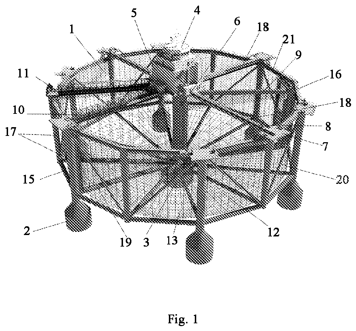

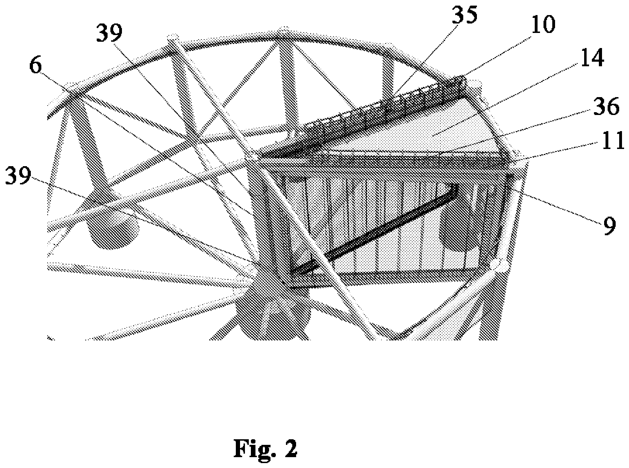

Fig. 2 is a perspective view of a part of the net cage shown in Fig. 1 with a crowding bulkhead in a first position and an elevatable bottom in an elevated position, and in which a compartment defined by the bottom and bulkheads has been emptied of fish;

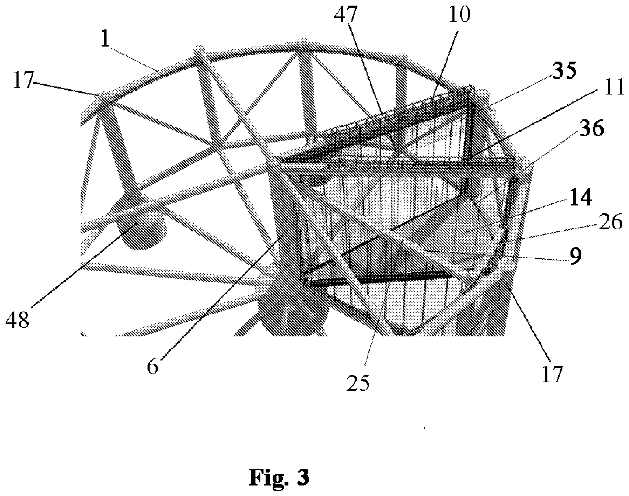

Fig. 3 is similar to Fig. 2, but shows the crowding bulkhead in a second position with the elevatable bottom in a lowered position, with fish being crowded into the compartment defined by the bottom and bulkheads;

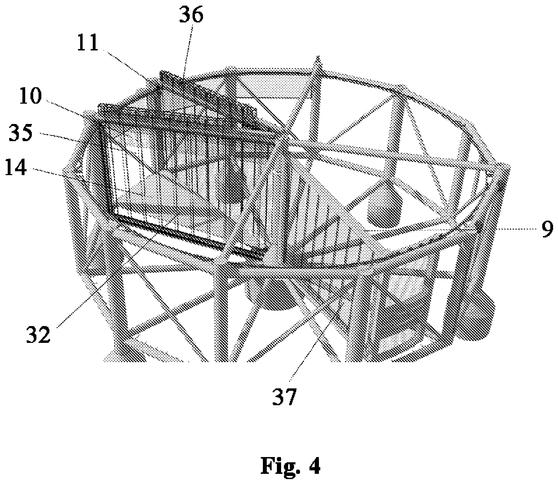

Fig. 4 is similar to Fig. 3, but shows the crowding bulkhead in a third position with the elevatable bottom in a lowered position, with fish being crowded into the compartment defined by the bottom and bulkheads;

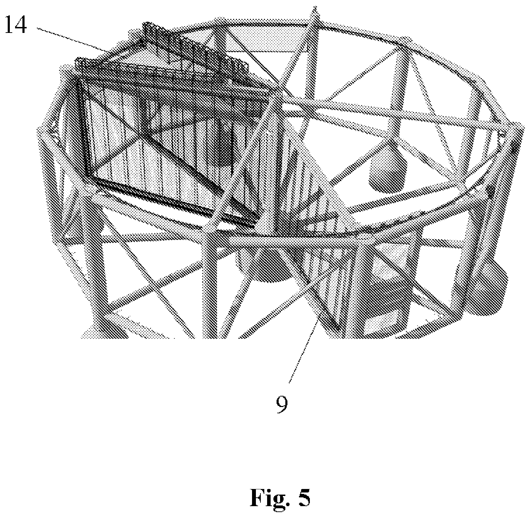

Fig. 5 is similar to Fig. 4, but shows the crowding bulkhead in a fourth position with the elevatable bottom in an elevated position, with the fixed bulkheads being closed, the elevatable bottom being elevated, and the compartment being emptied of fish;

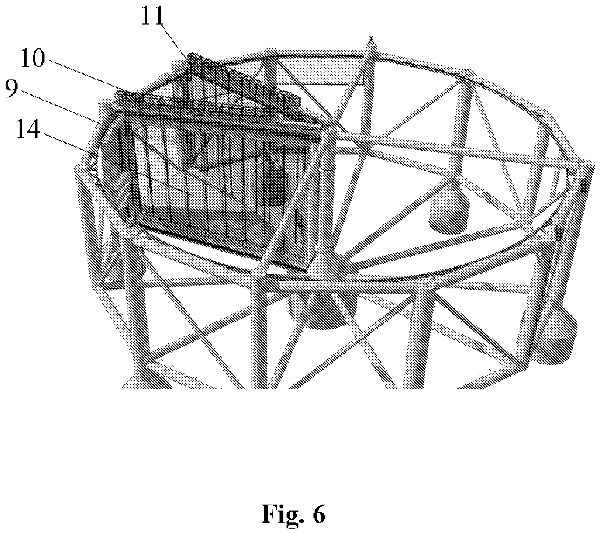

Fig. 6 is similar to Fig. 5, but shows the crowding bulkhead in a fifth position adjacent to a fixed bulkhead with the elevatable bottom in a lowered position, with one fixed bulkhead being closed, one fixed bulkhead being open, and the elevatable bottom being in a lowered position;

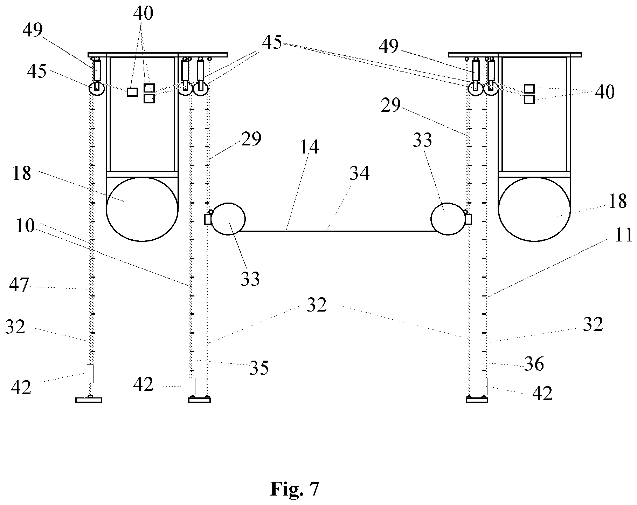

Fig. 7 is a schematic cross-section of an elevatable bottom and an upper part of two fixed bulkheads according to the invention;

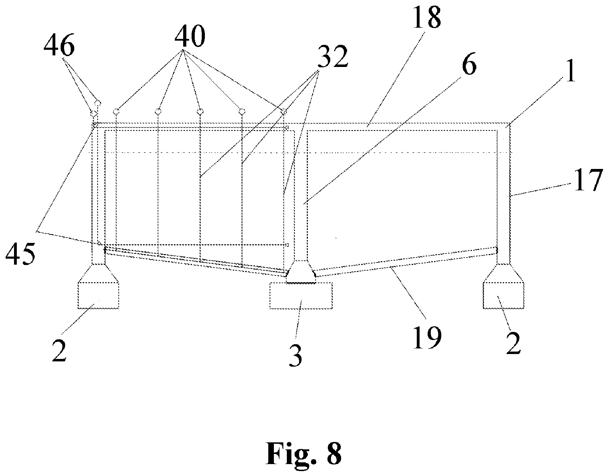

Figs. 8 - 11 show a sequence depicting how the guide wire may be run from a supporting and guiding position across an open bulkhead area to a position outside of the open bulkhead area;
Fig. 8 is a schematic of the net cage as seen in a cross-section perpendicular to the cross-section shown in Fig. 7;

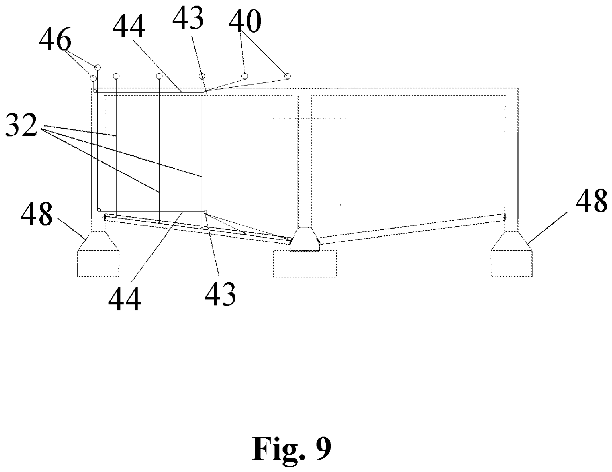

Fig. 9 is similar to Fig 8, but shows a subsequent step during pulling away of guide wires;

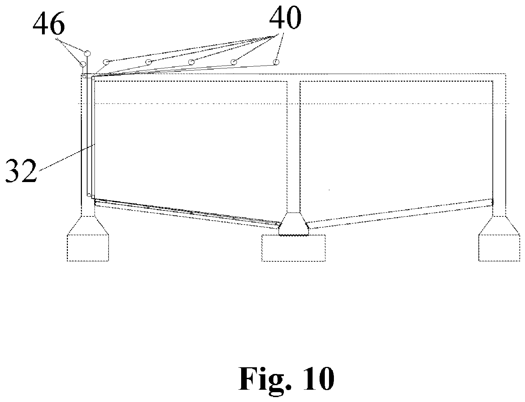

Fig. 10 is similar to Fig. 9, but shows a position in which the support wires are pulled entirely to the side and away from the open bulkhead area;

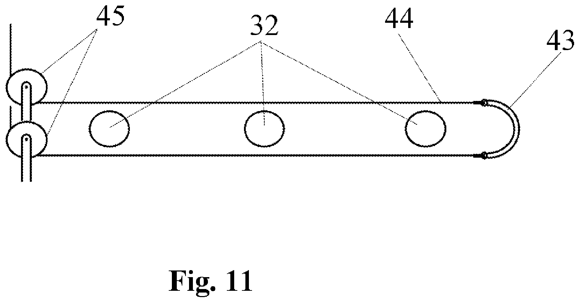

Fig. 11 shows a cross-section of support wires in a tightened position and a lateral pull wire;

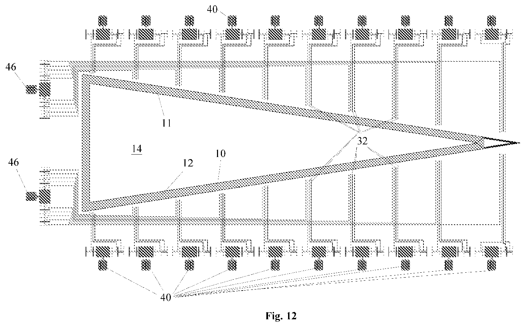

Fig. 12 is a schematic top view of two fixed bulkheads, showing how winches are configured for lifting or lowering the guide wires, barriers, and the elevatable bottom;

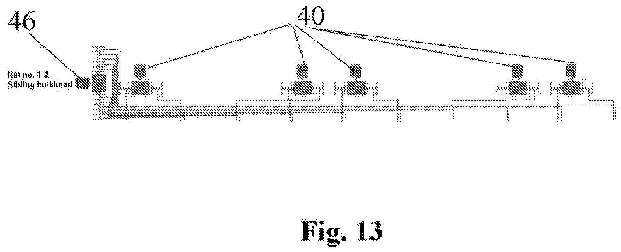

Fig. 13 is similar to Fig. 12, but shows how winches may be arranged on a sliding bulkhead;

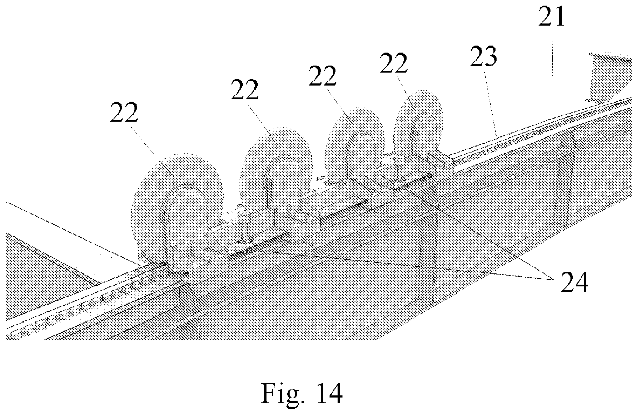

Fig. 14 shows a detail of running pulleys provided on an L-shaped crowding bulkhead and of a peripheral path along the circumference of a cylindrical, semisubmersible net cage; and

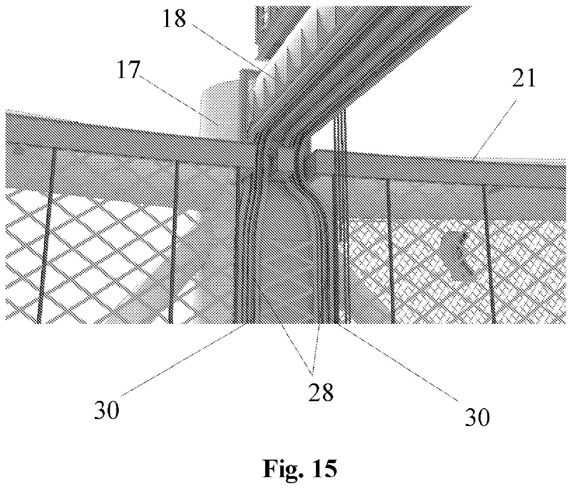

Fig. 15 shows a detail of an example of a mechanism for running guide wires.

### Detailed description of embodiments of the invention with reference to the accompanying drawings

In Fig. 1, a semisubmersible net cage 1 according to the invention is shown. The net cage has a generally circular or polygonal contour as seen from above, allowing a circumference and a radial direction to be defined. On the outside, the embodiment shown is a dodecahedron as it is constructed by straight elements along the circumference of the net cage. Thus, a cylindrical net cage is formed, which is considered more favourable than angular net cages with regard to the well-being of the fish. Net cage 1 has an outstretched lateral net 12 of a generally cylindrical shape, and a bottom net 13 which is typically flat or slightly tapered. Bottom net 13 and lateral net 12 are tautly outstretched so there is only a slight movement of the nets. Limiting the movement of nets 12, 13 is also favourable with respect to the well-being of the fish.

The semisubmersible net cage 1 comprises six peripheral ballast tanks 2 and one central ballast tank 3. Normally, the net cage will be in a semi-submerged operating position and central ballast tank 3 and peripheral ballast tanks 2 will be completely or partly filled with water. The ballast tanks may also be used for compensating for added load on the net cage, e.g. in relation to the amount of fodder in a centrally located fodder silo 5. The ballast tanks may be emptied for water in order to lift the net cage out of the water to an inspection position, in which only parts of central tank 3 and peripheral ballast tanks 2 are submerged in water. Peripheral ballast tanks 2 are formed with a tapering top (shown as 48 in Fig. 3 and Fig. 9) that allows the occurrence of a sudden change of the waterline area of the net cage to be avoided and instead results in a gradual change of the waterline area when the peripheral ballast tanks penetrate the water surface when the net cage is either lowered to an operating position or elevated to an inspection position, thereby increasing the stability of the net cage. Above fodder silo 5 is located an accommodation and control facility 4. The silo and these facilities, together with a repair facility, machine room, etc. form a central building. The central building is supported by a central column 6. Centre ballast tank 3 is mounted to central column 6, and four upper radial braces or support arms 18 extend from central column 6 outwards to a polygonal, upper support structure 16. The upper support structure 16 comprises twelve tangential rods or top truss chords which form a dodecahedron and are connected to twelve peripheral columns 17 which are in turn connected to a similar lower support structure 15. Twelve lower radial braces or support arms 19 extend from each peripheral column 17 inwards to central column 6. The lower radial support arms 19 each protrudes from a juncture which additionally includes two tangential rods of lower support structure 16, a peripheral column 17, and optionally two diagonal reinforcement rods 20. The radial support arms thus form an angle of 30° to each other, as seen in a plane perpendicular to central column 6.

Fodder can be transported from a suitable vessel via a funnel 8 on a mooring platform 7 and a conveyor belt along one of upper radial support arms 18 and to fodder silo 5.

A first fixed bulkhead 10 and a second fixed bulkhead 11 are each formed between a peripheral column 17, an upper radial support arm 18, central column 6, and a lower radial support arm 19. The first fixed bulkhead 10 and the second fixed bulkhead 11 form an angle of 30° to each other.

A sliding bulkhead 9 protrudes in a radial direction from central column 6 and outwards to a peripheral path 21, and is able to rotate about central column 6. The sliding bulkhead has substantially the same shape as the fixed bulkheads, and is able to rotate about the entire net cage 1 to crowd fish in between the first 10 and second 11 fixed bulkheads. Peripheral path 21 is circular and comprises a travelling path for running pulleys on sliding bulkhead 9 and a gear rim for engaging with gears on the sliding bulkhead.

Figs. 2-6 show a sequence of steps for crowding fish, by way of crowding bulkhead 9, first fixed bulkhead 10, second fixed bulkhead 11, and an elevatable bottom 14, between the first fixed bulkhead 10 and second fixed bulkhead 11. The elevatable bottom 14 is comprised by a triangular frame and a wire bottom. First fixed bulkhead 10, second fixed bulkhead 11, and crowding bulkhead 9 each comprises a net that can be elevated so that each bulkhead may selectively be fully opened, or may comprise a water-permeable wall consisting, for example, by a wire structure. From Figs. 2-6 it can also be seen that crowding bulkhead 9 has the shape of an L.

Fig. 2 shows the elevatable bottom 14 in a top position which is typically applicable when a fish pick-up vessel has pumped out all the fish. A first water-permeable barrier, or just barrier, 35 of the first fixed bulkhead 10 is in a bottom position and operating. A second water-permeable barrier, or just barrier, 36 of the second fixed bulkhead 11 has been elevated. A first water-permeable barrier of sliding bulkhead 9 is in a bottom position. Sliding bulkhead 9 is supported by support rings 39 around central column 6. Typically, barriers 35, 36 are nets having a suitable mesh width.

Fig. 3 is similar to Fig. 2, but shows net cage 1 with sliding bulkhead 9 in a second position in which a barrier of sliding bulkhead 9, barrier 36 of the second fixed bulkhead 11, and the elevatable bottom 14 are in a bottom position. First barrier 35 is in an open position. In this position, no fish will be present between the second fixed bulkhead and sliding bulkhead 9 as sliding bulkhead 9 rotates in a clockwise direction. From Fig. 3 it also appears that crowding bulkhead 9 has the shape of an L, of which a long side 25 is substantially straight and extends in a radial direction from the central column to the peripheral path along the circumference of the net cage. A short side 26 of the L-shaped crowding bulkhead is arched, and the arch form is adapted to the curvature of the peripheral path. The short side 26 is provided with running pulleys (shown as running pulleys 22 in Fig. 14) running along the peripheral path, and a drive unit (typically an electric motor or a hydraulic motor) having a gear (shown as gear 24 in Fig. 14) engaged with the gear rim along the travelling path, so that when the drive unit is operated, crowding bulkhead 9 will rotate about the central column. It is essential that crowding bulkhead 9 extends entirely from the central column and entirely up to the water-permeable lateral barrier so that a smallest possible gap is formed between the lateral barrier and the short side of crowding bulkhead 9 facing the water-permeable lateral barrier. Likewise, it is important that crowding bulkhead 9 extends entirely down to the water-permeable bottom barrier, and that the gaps between the short side of the crowding bulkhead facing the central column and the central column are as small as possible. Alternatively, crowding bulkhead 9 may be provided with brushes that seal against the water-penetrating lateral barrier and the water-penetrating bottom barrier. The reason for this is to avoid that fish are pinched or able to escape between the different components when the crowding bulkhead is operated. The short side 26 of the L-shaped crowding bulkhead also includes a water-permeable barrier, so that the L-shaped cross-section of the crowding bulkhead spans the entire height of the bulkhead.

As sliding bulkhead 9 is shaped as an L, having a long side 26 and a short side 25, first fixed bulkhead 10 is typically provided with two water-permeable barriers, where the third water-permeable barrier 47 may seal against the long side 25 of the L-shaped sliding bulkhead 9 and the second barrier 35 may seal out to the circumference of the net cage. This allows the volume between first fixed bulkhead 10 and second fixed bulkhead 11 to be emptied before the elevatable bottom 14 is lowered. The third water-permeable barrier 47 is used only in connection with start-up of the sequence for crowding fish during which sliding bulkhead 9 is positioned in parallel with third water-permeable barrier 47.

The barriers may also be used in combination with grids/nets to sort out fish below a particular size. An example of such a sorting barrier is a grid commonly referred to as a 'Shetland grid.'

The first water-permeable barrier 35 and second water-permeable barrier 36 and the two lateral nets 29 are all connected to tracks on the central column 6 and peripheral columns 17 in order to make sure they cover the entire radial length from central column 6 to peripheral columns 17. The third water-permeable barrier 47 is connected to tracks on the central column 6 and may cover the radial length of the short side 26 of sliding bulkhead 9. The water-permeable removable barrier of sliding bulkhead 9 is connected to tracks on the first lateral frame section and second lateral frame section to make sure it covers the entire radial length between the first lateral frame section and second lateral frame section of the sliding bulkhead. Fig. 4 is similar to Figs. 2 and 3, but shows sliding bulkhead 9, still with barrier 37 in the bottom position, in a position closer to the first fixed bulkhead 10. The first barrier 35 of first fixed bulkhead 10 is open, and fish are crowded between second fixed bulkhead 11, which is closed by the second barrier 36, and sliding bulkhead 9, which is closed by barrier 37 of the sliding bulkhead. Guide wires 32 run vertically along each barrier and helps keeping the barriers stationary. Typically, the barriers are formed by a grating or net being elevated by way of winches and lowered by way of weights. The guide wires also assist in guiding the elevatable bottom 14, which is shown in the bottom position.

Fig. 5 is similar to Figs. 2-4, but shows a position in which the first barrier is closed and bottom 14 is elevated for removing fish. Fish can be removed in several stages, and sliding bulkhead 9 is shown further rotated for crowding the fish. The further emptying of the net cage will involve lowering the elevatable bottom, opening the first barrier, rotating sliding bulkhead 9 clockwise in order to crowd the fish, closing the first barrier, elevating the elevatable bottom 14 while fish is pumped out, etc. These steps may be repeated until sliding bulkhead 9 is located adjacent to first fixed bulkhead 10, as shown in fig. 6.

Fig. 6 shows the elevatable bottom 14 in the bottom position before lifting and the final emptying, with sliding bulkhead 9 located adjacent to fixed bulkhead 10 and fish being crowded between first fixed bulkhead 10 and second fixed bulkhead 11.

Fig. 7 is a schematic cross-section of the elevatable bottom 14, the upper part (an upper radial support arm 18) of first fixed bulkhead 10, and the upper part (an upper radial support arm 18) of second fixed bulkhead 11. Guide wires 32 for guiding elevatable bottom 14 and for guiding the elevatable, water-permeable barriers 35, 36, 47 may be tightened or slacked by way of winches 40 and pulleys 45. Advantageously, pulleys 45 may be provided with shock absorbers 49 in order to reduce current and wave loads on winches 40 and the remaining support structure. The winches may also be used for lifting or lowering barriers 35, 36, 47. The support wires 32 for barriers 35, 36, 47 runs through weights 42 attached to the barriers. The weights 42 pull barriers 35, 36, 47 downwardly when winches 40 pay out for barriers 35, 36, 47 and make sure the barriers remain closed until the winches lift the barriers. The elevatable bottom 14 is shown composed by a bottom frame 33 expanding a bottom net 34. The bottom further includes guides for support wires 32. One lateral net 29 is mounted on each side of the elevatable bottom 14, so that elevating lateral nets 29 also elevates bottom 14. The lateral nets 29 may be fully lowered when the elevatable bottom 14 is fully lowered so that fish may be crowded above the elevatable bottom 14. Hence, the vertical lines in Fig. 7 would represent (in a left-to-right direction in the drawing): support wire; a first barrier; a second barrier; guide wire; guide wire; barrier for the elevatable bottom; barrier for the elevatable bottom; support wire; support wire; a third barrier. As mentioned above, the barriers are ordinary nets.

Figs. 8 - 11 is a sequence showing how the guide wires can be carried from a supporting and guiding position to a non-interfering position. Fig. 8 is a schematic view of net cage 1 as seen in a cross-section through the centre, perpendicularly to the section shown in Fig. 7. Seen in this cross-section are the centre ballast tank 3 at the bottom of central column 6, peripheral ballast tanks 2 at the bottom of the one half of the peripheral columns 17, upper radial support arms 18, and lower radial support arms 19. To the left of central column 6, a bulkhead may be formed. The bulkhead is spanned by a frame having an open frame section that may be blocked by one or two barriers, and is spanned by an upper frame section formed by an upper support arm 18, a lower frame section comprised by a lower radial support arm 19, a first lateral frame section comprised by a peripheral column 17, and a second frame section comprised by central column 6. To the left in the figure is also illustrated a fixed bulkhead and how guide wires 32 are run between the upper radial support arms 18 and the lower radial support arms 19 to retain and control the barriers, so as to keep them stationary. Guide wires 32 are slacked or tightened by winches 40. Guide wires 32 may be pulled to the side in order to fully open the barriers in that lateral pull wires connected via pulleys 45 to lateral pulling winches 46 may be tightened while at the same time winches 40 for support wires 32 pays out support wires 32.

Fig. 9 is similar to Fig 8, but shows a subsequent step during pulling away of guide wires 32 in order to prevent them from remaining in the bulkheads to potentially injure the fish. Winches 40 for guide wires 32 pay out wire, while lateral pulling winches 46 tighten lateral pull wires 44. Lateral pull wires 44 are treaded into tensioning bows 43 in order to reduce friction and prevent wear of the wires. In Fig. 9 it is clearly seen how the peripheral ballast tanks are formed with a tapered top 48 in order to avoid a sudden change in the waterline area of the net cage and to ensure a gradual change of the waterline area when the peripheral ballast tanks penetrates the water surface when the net cage is lowered to an operative position or elevated to an inspection position. This makes the net cage more stable.

Fig. 10 is similar to Fig. 9, but shows a position in which support wires 32 are pulled entirely to the side in that lateral pulling winches 46 have tightened wires 32 up to the peripheral columns. Winches 40 have paid out wire as necessary.

Fig. 11 shows a cross-section of support wires 32 in a tightened position, illustrating how lateral pull wire 44 is tread into tensioning bow 43 and tensioned by way of pulleys 45. As can be seen, lateral pull wires 44 loop around support wires 32.

Fig. 12 is a schematic view of the first fixed bulkhead 10, second fixed bulkhead 11, as well as the water-permeable lateral barrier 12 and the elevatable bottom 14. The fixed bulkheads and bottom form the compartment for crowded fish that can be emptied by a suitable vessel. Also seen is the system of winches 40 for adjusting support wires 32, and for lifting or lowering the barriers. Winches 40 may tighten the guide wires for the elevatable bottom, as well as elevate or lower the bottom. Each winch typically comprises a number of winch drums that can be engaged or disengaged, so that each winch may serve several purposes. Each winch 40 operates three wires, which wires operates (in a left-to-right direction) the lateral net mounted on each side of the elevatable bottom and two guide wires, respectively. In other words, winches 40 also will elevate or lower the elevatable bottom 14. Each winch 46 operates the nets on the fixed bulkheads that are not mounted to the elevatable bottom.

In Fig. 13, it is seen that the sliding bulkhead has its own dedicated winches 40, 46 mounted along the upper long side of the sliding bulkhead for lifting and lowering the guide wires and barrier. One of these winches 46 may be used for the lateral pull wires, so that when lateral pull wire winch 46 hauls in such wires, guide wire winches 40 pay out guide wire at the same time.

In Fig. 14 a detail of running pulleys 22 located on the short side 25 of the L-shaped crowding bulkheads 9 (see Fig. 3) is shown. Running pulleys 22 run along a peripheral path 21 along the circumference of the net cage. The gears 24 are driven by one or more drive units and supported at said short side 25. Gear 24 is engaged with a gear rim 23 along the peripheral path 21. Thus, operating the drive unit drives the crowding bulkhead in rotation about the central column, along the circumference of the net cage.

Fig. 15 shows an example of a mechanism for extending guide wires between the upper frame section and the lower frame section.

In this embodiment, the support wires are not pulled to the side by the lateral pull wires but, instead, they are mounted to travelling blocks and comprise a mechanism for running guide wires between the upper frame section and the lower frame section by carrying the lower ends of the wires to the lower frame section when necessary.

Travelling blocks are positioned in sliding tracks 30 along the bulkheads. An upper corner of a bulkhead at which the upper radial support arm 18 constituting an upper frame section meets a peripheral column 17 constituting a lateral frame section. The peripheral path 21 extends through the open area of the bulkhead. Chains 28 or other pulling means (wire, sprocket chain, or the like) run in the sliding grooves 30 along the entire circumference of the bulkhead to pull the travelling blocks along sliding grooves 30. When support wires are put out, a suitable drive unit will drive chain 28 in an orbit around the tracks, and will pull therewith the travelling blocks with the respective support wires until their lower portions are positioned along the lower frame section, comprised by a lower radial support arm. Also, in this example, winches will pay out or tighten the upper portions of the guide wires.

The operation of the winches and sliding bulkhead may be coordinated by a separate controller, so that the operations can be accomplished partly or fully automatically.

| | | | |
|---|---|---|---|
| 1 | Net cage | 26 | Long side of sliding bulkhead |
| 2 | Peripheral ballast tanks | 27 | |
| 3 | Central ballast tank | 28 | Pulling means |
| 4 | Accommodation area | 29 | Lateral net |
| 5 | Fodder silo | 30 | Guiding rails/sliding tracks |
| 6 | Central column | 31 | Wire guide |
| 7 | Mooring platform | 32 | Support wire |
| 8 | Fodder loading funnel | 33 | Bottom frame |
| 9 | Sliding bulkhead | 34 | Bottom net |
| 10 | First fixed bulkhead | 35 | First water-penetrable barrier |
| 11 | Second fixed bulkhead | 36 | Second water-penetrable barrier |
| 12 | Water-penetrable lateral barrier | 37 | Water-penetrable barrier of sliding bulkhead |
| 13 | Water-penetrable bottom barrier | 38 | Sliding bulkhead stiffener |
| 14 | Elevatable bottom | 39 | Supporting rings for sliding bulkhead |
| 15 | Lower support structure | 40 | Guide wire winch |
| 16 | Upper support structure | 41 | Winches for elevatable bottom |
| 17 | Peripheral columns | 42 | Weight for barriers |
| 18 | Upper radial support arms | 43 | Tensioning bow |
| 19 | Lower radial support arms | 44 | Lateral pull wire |
| 20 | Strengthening rods | 45 | Pulleys |
| 21 | Peripheral path | 46 | Lateral pulling winch |
| 22 | Running pulleys | 47 | Third water-penetrable barrier |
| 23 | Gear rim | 48 | Tapering section of ballast tank |
| 24 | Gear for engaging gear rim | 49 | Shock absorbers for pulleys |
| 25 | Short side of sliding bulkhead | | |

## Claims

1. A generally cylindrical semisubmersible net cage (1) comprising a generally circular upper support structure (16), a generally circular lower support structure (15), at least three peripheral columns (17) having a central longitudinal axis extending between the upper support structure (16) and the lower support structure (15), upper radial support arms (18) extending from the generally circular upper support structure (16) to an upper centre thereof, lower radial support arms (19) extending from the generally circular lower support structure (16) to a lower centre thereof, a central column (6) attached to the upper radial support arms (18) and the lower radial support arms (19), extending between the centre of the upper support structure (16) and the centre of the lower support structure (15);
a water-permeable generally cylindrical lateral barrier (12) extended between the upper support structure (16) and the generally circular lower support structure (15), and a water-permeable generally circular bottom barrier (13) extended along a circumference of the generally circular lower support structure (15);
a first fixed bulkhead (10) having a first removable barrier, extending radially between the central column (6), the generally circular upper support structure (16), and the generally circular lower support structure (15);
a sliding bulkhead (9) having a removable barrier, pivotally supported at the central column (6) and extending in a radial direction between the central column (6), the generally circular upper support structure (16), and the generally circular lower support structure (15), the sliding bulkhead (9) being rotatable about the central column (6);
ballast tanks for lifting, lowering and balancing the generally cylindrical semisubmersible net cage (1);
said net cage being **characterized in that** it further comprises a second fixed bulkhead (11) having a second removable barrier, extending radially between the central column (6), the generally circular upper support structure (16), and the generally circular lower support structure (15); and that it further comprises an elevatable bottom (14) between the first fixed bulkhead (10) and the second fixed bulkhead (11).

2. The generally cylindrical semisubmersible net cage of claim 1, further comprising at least three ballast tanks having a central vertical axis and being positioned along the generally circular lower support structure.

3. The generally cylindrical semisubmersible net cage of claim 2, wherein the at least three ballast tanks positioned along the generally circular lower support structure protrude below the generally circular lower support structure (15) in a direction away from the generally circular upper support structure (16).

4. The generally cylindrical semisubmersible net cage of claim 2, wherein the at least three ballast tanks positioned along the generally circular lower support structure protrude below the generally circular lower support structure (15) in a direction away from the generally circular upper support structure (16), each of the at least three ballast tanks comprising a vertical axis, the at least three ballast tanks comprising a section having an external portion with a substantially uniform cross-sectional area along the vertical axis and a tapering section (48) having a decreasing cross-sectional area along the vertical axis.

5. The generally cylindrical semisubmersible net cage of claim 4, wherein the section having an external portion with a substantially equal cross-sectional area along the vertical axis is a cylindrical section and the tapering section (48) having a decreasing cross-sectional area along the vertical axis is a generally tapered section (48).

6. The generally cylindrical semisubmersible net cage of any one of claims 2-5, wherein the at least three ballast tanks are mounted to the at least three peripheral columns (17), and wherein the longitudinal axes of the ballast tanks are coincident with the longitudinal axes of the peripheral columns (17).

## Patentansprüche

1. Im Allgemeinen zylindrischer Halbtauchnetzkäfig (1), der Folgendes umfasst: eine im Allgemeinen kreisförmige obere Stützstruktur (16), eine im Allgemeinen kreisförmige untere Stützstruktur (15), wenigstens drei periphere Säulen (17), die eine zentrale Längsachse aufweisen, die sich zwischen der oberen Stützstruktur (16) und der unteren Stützstruktur (15) erstreckt, obere radiale Stützarme (18), die sich von der im Allgemeinen kreisförmigen oberen Stützstruktur (16) zu einem oberen Zentrum davon erstrecken, untere radiale Stützarme (19), die sich von der im Allgemeinen kreisförmigen unteren Stützstruktur (16) zu einem unteren Zentrum davon erstrecken, eine zentrale Säule (6), die an den oberen radialen Stützarmen (18) und den unteren radialen Stützarmen (19) angebracht ist, die sich zwischen dem Zentrum der oberen Stützstruktur (16) und dem Zentrum der unteren Stützstruktur (15) erstreckt;
eine wasserdurchlässige im Allgemeinen zylindrische Seitenbarriere (12), die sich zwischen der oberen Stützstruktur (16) und der im Allgemeinen kreisförmigen unteren Stützstruktur (15) erstreckt, und eine wasserdurchlässige im Allgemeinen kreisförmige Bodenbarriere (13), die sich entlang eines Umfangs der im Allgemeinen kreisförmigen unteren Stützstruktur (15) erstreckt;
eine erste feste Trennwand (10), die eine erste entfernbare Barriere aufweist, die sich zwischen der zentralen Säule (6), der im Allgemeinen kreisförmigen oberen Stützstruktur (16) und der im Allgemeinen kreisförmigen unteren Stützstruktur (15) radial erstreckt;
eine Schiebetrennwand (9), die eine entfernbare Barriere aufweist, die an der zentralen Säule (6) schwenkbar gestützt ist und sich in einer radialen Richtung zwischen der zentralen Säule (6), der im Allgemeinen kreisförmigen oberen Stützstruktur (16) und der im Allgemeinen kreisförmigen unteren Stützstruktur (15) erstreckt, wobei die Schiebetrennwand (9) um die zentrale Säule (6) herum drehbar ist; und
Ballasttanks zum Hochziehen, Absenken und Ausbalancieren des im Allgemeinen zylindrischen Halbtauchnetzkäfigs (1);
wobei der Netzkäfig **dadurch gekennzeichnet ist, dass** er ferner eine zweite feste Trennwand (11) umfasst, die eine zweite entfernbare Barriere aufweist, die sich zwischen der zentralen Säule (6), der im Allgemeinen kreisförmigen oberen Stützstruktur (16) und der im Allgemeinen kreisförmigen unteren Stützstruktur (15) radial erstreckt; und dadurch, dass er ferner einen anhebbaren Boden (14) zwischen der ersten festen Trennwand (10) und der zweiten festen Trennwand (11) umfasst.

2. Im Allgemeinen zylindrischer Halbtauchnetzkäfig nach Anspruch 1, der ferner wenigstens drei Ballasttanks umfasst, die eine zentrale vertikale Achse aufweisen und entlang der im Allgemeinen kreisförmigen unteren Stützstruktur positioniert sind.

3. Im Allgemeinen zylindrischer Halbtauchnetzkäfig nach Anspruch 2, wobei die wenigstens drei Ballasttanks, die entlang der im Allgemeinen kreisförmigen unteren Stützstruktur positioniert sind, unterhalb der im Allgemeinen kreisförmigen unteren Stützstruktur (15) in einer Richtung weg von der im Allgemeinen kreisförmigen oberen Stützstruktur (16) hervorstehen.

4. Im Allgemeinen zylindrischer Halbtauchnetzkäfig nach Anspruch 2, wobei die wenigstens drei Ballasttanks, die entlang der im Allgemeinen kreisförmigen unteren Stützstruktur positioniert sind, unterhalb der im Allgemeinen kreisförmigen unteren Stützstruktur (15) in einer Richtung weg von der im Allgemeinen kreisförmigen oberen Stützstruktur (16) hervorstehen, wobei jeder der wenigstens drei Ballasttanks eine vertikale Achse umfasst, wobei die wenigstens drei Ballasttanks einen Bereich, der einen Außenabschnitt mit einer im Wesentlichen gleichmäßigen Querschnittsfläche entlang der vertikalen Achse aufweist, und einen sich verjüngenden Bereich (48) umfassen, der eine abnehmende Querschnittschnittfläche entlang der vertikalen Achse aufweist.

5. Im Allgemeinen zylindrischer Halbtauchnetzkäfig nach Anspruch 4, wobei der Bereich, der einen Außenabschnitt mit einer im Wesentlichen gleichen Querschnittsfläche entlang der vertikalen Achse aufweist, ein zylindrischer Bereich ist und der sich verjüngende Bereich (48), der eine abnehmende Querschnittsfläche entlang der vertikalen Achse aufweist, ein im Allgemeinen verjüngter Bereich (48) ist.

6. Im Allgemeinen zylindrischer Halbtauchnetzkäfig nach einem der Ansprüche 2-5, wobei die wenigstens drei Ballasttanks an den wenigstens drei peripheren Säulen (17) montiert sind und wobei die Längsachsen der Ballasttanks mit den Längsachsen der peripheren Säulen (17) deckungsgleich sind.

## Revendications

1. Cage en filet semi-submersible généralement cylindrique (1) comprenant une structure de support supérieure généralement circulaire (16), une structure de support inférieure généralement circulaire (15), au moins trois colonnes périphériques (17) présentant un axe longitudinal central s'étendant entre la structure de support supérieure (16) et la structure de support inférieure (15), des bras de support radiaux supérieurs (18) s'étendant de la structure de support supérieure généralement circulaire (16) à son centre supérieur, des bras de support radiaux inférieurs (19) s'étendant de la structure de support inférieure généralement circulaire (16) à son centre inférieur, une colonne centrale (6) fixée aux bras de support radiaux supérieurs (18) et aux bras de support radiaux inférieurs (19), s'étendant entre le centre de la structure de support supérieure (16) et le centre de la structure de support inférieure (15) ;
une barrière latérale (12) généralement cylindrique perméable à l'eau s'étendant entre la structure de support supérieure (16) et la structure de support inférieure généralement circulaire (15), et une barrière inférieure généralement circulaire perméable à l'eau (13) s'étendant le long d'une circonférence de la structure de support inférieure généralement circulaire (15) ;
une première cloison fixe (10) présentant une première barrière amovible, s'étendant radialement entre la colonne centrale (6), la structure de support supérieure généralement circulaire (16) et la structure de support inférieure généralement circulaire (15) ;
une cloison coulissante (9) présentant une barrière amovible, soutenue de manière pivotante au niveau de la colonne centrale (6) et s'étendant dans une direction radiale entre la colonne centrale (6), la structure de support supérieure généralement circulaire (16) et la structure de support inférieure généralement circulaire (15), la cloison coulissante (9) pouvant tourner autour de la colonne centrale (6) ; et
des réservoirs de ballast pour soulever, abaisser et équilibrer la cage en filet semi-submersible généralement cylindrique (1) ;
ladite cage en filet étant **caractérisée en ce qu'**elle comprend en outre une seconde cloison fixe (11) présentant une seconde barrière amovible, s'étendant radialement entre la colonne centrale (6), la structure de support supérieure généralement circulaire (16) et la structure de support inférieure généralement circulaire (15) ; et
**en ce qu'**elle comprend en outre un fond pouvant être élevé (14) entre la première cloison fixe (10) et la seconde cloison fixe (11).

2. Cage en filet semi-submersible généralement cylindrique selon la revendication 1, comprenant en outre au moins trois réservoirs de ballast présentant un axe vertical central et étant positionnés le long de la structure de support inférieure généralement circulaire.

3. Cage en filet semi-submersible généralement cylindrique selon la revendication 2, les au moins trois réservoirs de ballast positionnés le long de la structure de support inférieure généralement circulaire faisant saillie sous la structure de support inférieure généralement circulaire (15) dans une direction s'éloignant de la structure de support supérieure généralement circulaire (16).

4. Cage en filet semi-submersible généralement cylindrique selon la revendication 2, les au moins trois réservoirs de ballast positionnés le long de la structure de support inférieure généralement circulaire faisant saillie sous la structure de support inférieure généralement circulaire (15) dans une direction s'éloignant de la structure de support supérieure généralement circulaire (16), chacun des au moins trois réservoirs de ballast comprenant un axe vertical, les au moins trois réservoirs de ballast comprenant une section présentant une partie externe avec une section transversale sensiblement uniforme le long de l'axe vertical et une section conique (48) présentant une section transversale décroissante le long de l'axe vertical.

5. Cage en filet semi-submersible généralement cylindrique selon la revendication 4, la section présentant une partie externe avec une section transversale sensiblement égale le long de l'axe vertical étant une section cylindrique et la section conique (48) présentant une section transversale décroissante le long de l'axe vertical étant une section généralement effilée (48).

6. Cage en filet semi-submersible généralement cylindrique selon l'une quelconque des revendications 2 à 5, les au moins trois réservoirs de ballast étant montés sur les au moins trois colonnes périphériques (17), et les axes longitudinaux des réservoirs de ballast coïncidant avec les axes longitudinaux des colonnes périphériques (17).
